# FASCICULE DE BREVET EUROPEEN

(11) **EP 2 311 547 B1**
(45) Date de publication et mention de la délivrance du brevet: **05.06.2013**
(21) Numéro de dépôt: 10015953.2
(22) Date de dépôt: 04.01.2006
(51) Int. Cl.: B01D 53/86, B01D 53/56, B01D 53/96

(54) **REACTEUR CATALYTIQUE DE DENOXIFICTATION DE GAZ**
KATALYTICHER REAKTOR ZUR ENTFERNUNG VON NOX
CATALYTIC REACTOR FOR GAS DENOXIFICATION

(30) Priorité: 04.01.2005 FR 0550021
(43) Date de publication de la demande: 20.04.2011
(62) Demande divisionnaire de: 06290010.5
(73) Titulaire: Vinci Environnement, 92500 Rueil Malmaison (FR)
(72) Inventeur: Morice, Ludovic, 60190 Bailleul le Soc (FR)
(74) Mandataire: Novagraaf Technologies

(56) Documents cités:
- FR-A- 2 855 767
- US-B1- 6 340 002

## Description

L'invention concerne un réacteur catalytique pour la mise en oeuvre d'un procédé de dénoxification de gaz,

On entend par « dénoxification » d'un gaz la réduction par voie catalytique des oxydes d'azotes contenus dans ledit gaz. Les oxydes d'azotes, désignés de façon générale par la formule NOx, comprennent notamment les composés suivants: NO, N0₂. N₂0.

Les procédés de dénoxification s'appliquent notamment aux gaz issus de l'incinération des ordures ménagères, et permettent de diminuer la teneur en oxydes d'azote des gaz finalement rejetés à l'atmosphère, de sorte que cette teneur soit inférieure au seuil réglementaire imposé.

Dans les procédés connus, les gaz à traiter sont introduits en entrée d'un réacteur catalytique, en phase de fonctionnement, transitent par un catalyseur approprié afin de subir la dénoxification souhaitée, avant d'être rejetés à **l'atmosphère.**

Généralement le procédé de dénoxification par voie catalytique est une étape supplémentaire dans le traitement des gaz. La dénoxfication est réalisée après l'étape de dépoussiérage et de déchloration/désulfuration.

Au contact des gaz contenant les oxydes d'azote, le catalyseur se charge progressivement en différents sels issus des réactions de combinaison entre NH₃ et HCI/SO₂ résiduels, et perd de ce fait une partie de son activité. Il est donc nécessaire de régénérer périodiquement le catalyseur, afin qu'il retrouve ses performances, et que, en sortie, les teneurs en NOx restent inférieures au seuil réglementaire.

Ainsi, en phase de régénération, les procédés connus prévoient de faire traverser le catalyseur par un gaz chauffé à une température suffisamment importante pour provoquer la sublimation des sels et leur évacuation sous forme gazeuse (NH₃, S0₂, HGI).

Toutefois, dans les réalisations connues, les gaz issus de la régénération sont évacués de la même façon que les gaz traités, voire simultanément dans un même conduit lorsque le réacteur est pourvu de plusieurs modules dont certains sont en phase de fonctionnement tandis que les autres sont en phase de régénération. Or, les gaz issus de la régénération contiennent sous forme de gaz les polluants issus des sels ôtés du catalyseur. Ainsi, les teneurs maximales réglementaires en polluants des gaz rejetés à l'atmosphère ne sont plus respectées (HGI, S0₂, NH₃).

Le FR2855767 décrit un réacteur catalytique comprenant un collecteur d'adduction de fumées, un collecteur de sortie, un collecteur de régénération et une pluralité de cellules contenant un catalyseur apte à permettre la dénoxification des gaz à traiter.

Toutefois, ce réacteur ne permet pas de faire passer au travers de modules, au choix, les gaz à traiter ou un gaz de régénération et d'évacuer séparément les gaz traités ou les gaz issus de **la** régénération et il ne peut donc être régénéré facilement.

L'invention vise à pallier cet inconvénient.

A cet effet, l'invention concerne un réacteur catalytique pour la mise en oeuvre du procédé tel que précédemment décrit, le réacteur comprenant :
- un premier compartiment d'entrée dans lequel les gaz à traiter sont destinés à être introduits ;
- un premier compartiment de sortie depuis lequel les gaz traités sont destinés à être évacués ;
- au moins deux modules, chaque module contenant un catalyseur apte à permettre la dénoxification des gaz à traiter et présentant un premier orifice d'entrée communiquant avec le premier compartiment d'entrée du réacteur et un premier orifice de sortie communiquant avec le premier compartiment de sortie du réacteur;
- un deuxième compartiment d'entrée dans lequel des gaz de régénération du catalyseur sont destinés à être introduits, chaque module présentant un deuxième orifice d'entrée communiquant avec ledit deuxième compartiment d'entrée du réacteur:
- pour chaque module, des moyens d'obturation d'entrée mobiles aptes à obturer sélectivement le premier ou le deuxième orifice d'entrée dudit module;
- un deuxième compartiment de sortie depuis lequel les gaz issus de la régénération du catalyseur sont destinés à être évacués, chaque module présentant un deuxième orifice de sortie communiquant avec ledit deuxième compartiment de sortie du réacteur;
- pour chaque module, des moyens d'obturation de sortie mobiles aptes à obturer sélectivement le premier ou le deuxième orifice de sortie dudit module, lesdits moyens d'obturation d'entrée et de sortie étant agencés pour que chaque module puisse, en fonction des besoins, être traversé soit par les gaz à traiter soit par les gaz de régénération, indépendamment du ou des autres modules.

Les moyens d'obturation d'entrée et/ou de sortie peuvent comprendre un volet d'obturation fixé sur une tige de vérin double effet, ladite tige étant apte à être déplacée entre une première position, dans laquelle le volet d'obturation obture le premier orifice d'entrée, respectivement de sortie, et une deuxième position, dans laquelle le volet d'obturation obture le deuxième orifice d'entrée, respectivement de sortie.

Le premier compartiment d'entrée, respectivement de sortie, est par exemple situé en-dessous du deuxième compartiment d'entrée, respectivement de sortie, une zone d'un module étant intercalée entre les premier et deuxième compartiments, de sorte que ladite zone puisse être en communication avec les premier et deuxième compartiments via le premier et le deuxième orifices.

Les autres caractéristiques de l'invention résultent de la description qui suit de modes de réalisation, description effectuée en référence aux figures annexées dans lesquelles :
- la figure 1 est une représentation schématique d'une installation de dénoxification de gaz selon l'invention, comprenant notamment un réacteur catalytique à 4 modules :
- la figure 2 est une vue en élévation et partiellemet en coupe verticale du réacteur catalytique de la figure 1 ;
- la figure 3 est une vue de dessus du réacteur catalytique de la figure 2 ;
- les figures 4 et 5 sont des vues en coupe d'un module du réacteur catalytique, selon la ligne AA de la figure 2, illustrant l'écoulement des gaz, respectivement en mode de traitement et en mode de régénération.

Une installation 1 de dénoxification de gaz comprend un conduit 2 d'amenée des gaz à traiter 3, issus par exemple d'une installation d'incinération des ordures ménagères.

Les gaz à traiter 3 sont tout d'abord introduits dans différents appareils de traitement préalables, tels qu'un appareil 4 de traitement du HCI, S0₂ et un équipement de filtration 5 permettant un dépoussiérage des gaz 3.

Les gaz à traiter 3 sont ensuite acheminés vers une grille d'injection 6 d'ammoniaque 7, puis introduits, à l'extrémité aval du conduit 2, dans un premier compartiment d'entrée 8 d'un réacteur catalytique 9.

Une partie des gaz à traiter 3 peut être acheminée vers le réacteur 9 via un conduit 10, connecté à son extrémité amont au conduit 2 d'amenée des gaz à traiter 3, en amont du réacteur 9, et, à son extrémité aval, à un deuxième compartiment d'entrée 11 du réacteur 9.

Une vanne 12 permet de réguler la proportion de gaz à traiter 3 passant par le conduit 10. Un brûleur 13, alimenté en combustible exempt de soufre 14, est intercalé dans le conduit 10, de sorte à chauffer les gaz à traiter 3, de sorte à obtenir des gaz de régénération 15.

Le réacteur 9 possède un premier compartiment de sortie 16 depuis lequel sont évacués les gaz traités 17 via un conduit d'évacuation 18, et un deuxième compartiment de sortie 19 depuis lequel sont évacués les gaz issus de la régénération 20 via un conduit d'évacuation 21.

Le conduit d'évacuation 21 des gaz issus de la régénération 20 est connecté, à son extrémité aval, au conduit d'amenée 2, en amont de l'appareil 4.

Le conduit d'évacuation 18 des gaz traités 17 est connecté, à son extrémité aval, à un conduit de sortie 22 débouchant en partie inférieure d'une cheminée 23 par laquelle les gaz traités 17 sont rejetés à l'atmosphère. Une série d'analyseurs 24 permet le contrôle de la teneur des gaz rejetés en différents composés, parmi lesquels: HCI, SO₂, NOx, NH₃, H₂O, COT, CO.

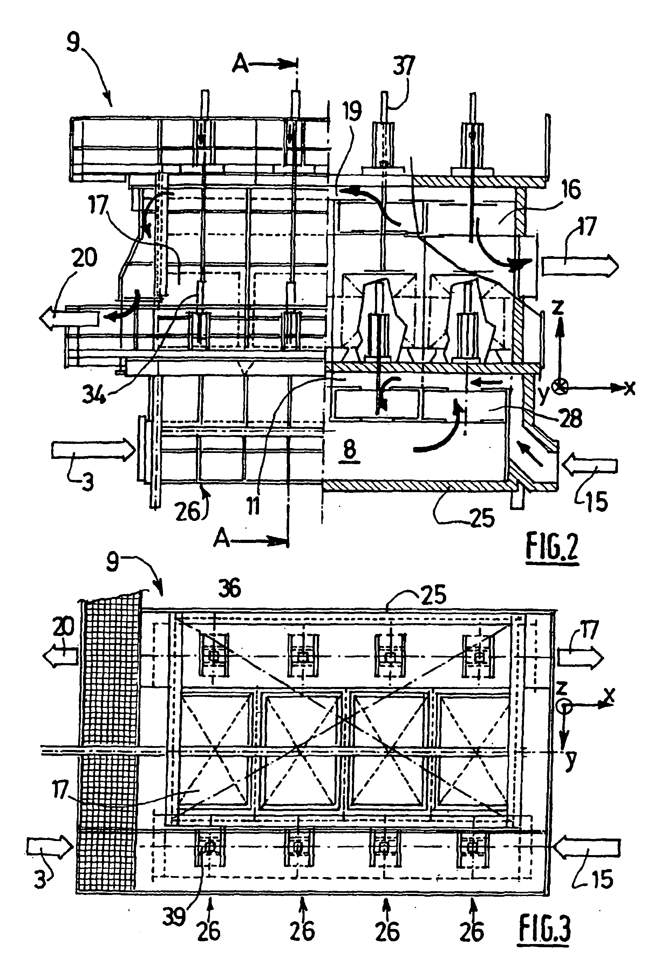

On décrit à présent plus précisément le réacteur catalytique 9 (figures 2 et 3).

Le réacteur 9 comporte une paroi latérale 25 définissant un volume intérieur comportant en partie inférieure les premier et deuxième compartiments d'entrée 8, 11 et en partie supérieure les premier et deuxième compartiments de sortie 16,19.

Dans d'autres modes de réalisation non représentés, on peut toutefois prévoir que la paroi latérale 25 définisse un volume intérieur comportant en partie supérieure les premier et deuxième compartiments d'entrée 8, 11 et en partie inférieure les premier et deuxième compartiments de sortie 16, 19 de sorte à réaliser une circulation descendante des gaz.

Les compartiments 8, 11, 16, 19 sont globalement disposés selon une direction longitudinale x. On définit par ailleurs la direction verticale ascendante z et la direction transversale y telle que (x, y , z) forme un repère orthogonal.

Le premier compartiment d'entrée 8 est situé en-dessous du deuxième compartiment d'entrée 11 et écarté de celui-ci. De même, le premier compartiment de sortie 16 est situé en-dessous du deuxième compartiment de sortie 19 et écarté de celui-ci.

Les premier et deuxième compartiments d'entrée 8, 11 sont décalés transversalement et verticalement vers le bas par rapport aux premier et deuxième compartiments de sortie 16, 19.

Ainsi, en coupe verticale perpendiculairement à l'axe x, le volume intérieur défini par la paroi latérale 25 présente globalement une portion centrale de forme sensiblement rectangulaire, et deux portions latérales de forme sensiblement rectangulaires décalées verticalement et transversalement l'une par rapport à l'autre.

Le réacteur..9 est divisé, le long de l'axe x, en plusieurs modules 26 par exemple sensiblement identiques, ici 4 modules, aptes à fonctionner en parallèle.

Un module 26 contient en partie centrale un bloc catalyseur 27 se présentant par exemple sous la forme d'un produit catalyseur (tel qu'un oxyde de vanadium) en vrac ou fixé sur un garnissage.

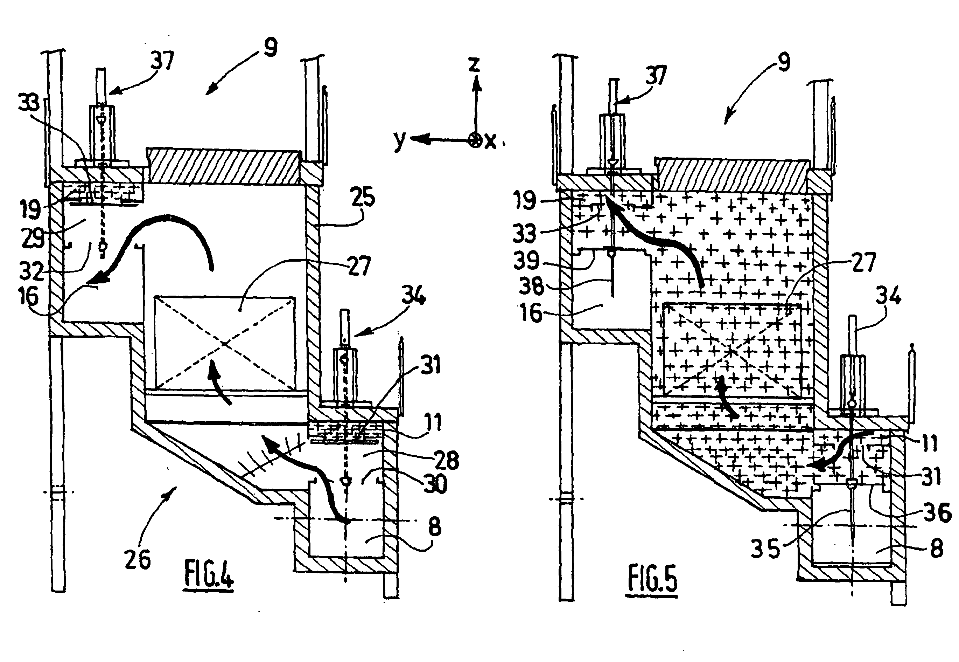

La figure 4 détaille les zones de circulation.

Le module 26 comprend également une zone d'entrée 28 intercalée entre les premier et deuxième compartiments d'entrée 8, 11 et une zone de sortie 29, intercalée entre les premier et deuxième compartiments de sortie 16, 19.

Le module 26 présente, dans la zone d'entrée 28, un premier orifice d'entrée 30 communiquant avec le premier compartiment d'entrée 8 et un deuxième orifice d'entrée 31 communiquant avec le deuxième compartiment d'entrée 11. Le module - 26 présente, dans la zone de sortie 29, un premier orifice de sortie 32 communiquant avec le premier compartiment de sortie 16 et un deuxième orifice de sortie 33 communiquant avec le deuxième compartiment de sortie 19.

Un vérin double effet 34 comprenant une tige 35 verticale est placé au voisinage de la zone d'entrée 28, au-dessus du deuxième compartiment d'entrée 11. Sur la tige 35 est fixé un volet d'obturation 36 apte à être déplacé, par suite du coulissement de la tige 35, entre une première position, dans laquelle le volet 36 obture le premier orifice d'entrée 30 et une deuxième position, dans laquelle le volet 36 obture le deuxième orifice d'entrée 31.

De même, un vérin double effet 37 comprenant une tige 38 verticale est placé au voisinage de la zone de sortie 29, au-dessus du deuxième compartiment de sortie 19. Sur la tige 38 est fixé un volet d'obturation 39 apte à être déplacé, par suite du coulissement de la tige 38, entre une première position, dans laquelle le volet 39 obture le premier orifice de sortie 32 et une deuxième position, dans laquelle le volet 39 obture le deuxième orifice de sortie 33.

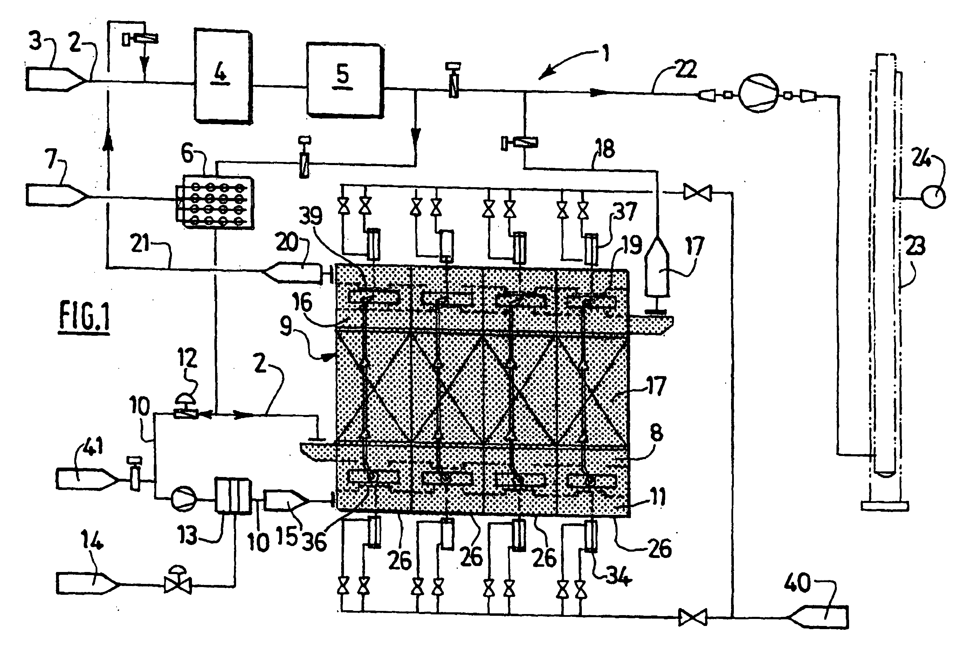

Les vérins 34, 37 sont actionnés par l'injection d'air comprimé 40 de façon sélective, grâce à un système d'électro-vannes (voir figure 1).

Le réacteur 9 forme ainsi un ensemble compact et de conception relativement simple.

On décrit à présent le procédé de dénoxification des gaz à traiter 3 en référence à la figure 4.

Comme indiqué précédemment, les gaz 3 sont amenés dans le premier compartiment d'entrée 8 du réacteur 9. Les vérins 34 du ou des modules aptes à assurer la dénoxification sont dans la position telle que le deuxième orifice d'entrée 31 est obturé, tandis que les vérins 37 sont dans la position telle que le deuxième orifice de sortie 33 est obturé. Les gaz pénètrent alors dans le module 26, traversent le bloc catalyseur 27 puis pénètrent dans le premier compartiment de sortie 16 avant d'être évacués par le conduit 18. En fonctionnement normal, tous les modules fonctionnent ainsi en parallèle.

La dénoxification se fait en parallèle dans les 4 modules. La température des gaz à traiter 3, en entrée du réacteur 9, est comprise entre 165 et 240°C, de référence entre. 185 et 200°C environ. A cette température, il se forme des sels qui sont adsorbés sur le catalyseur et en diminue progressivement l'efficacité.

L'activité du catalyseur est régulièrement suivie, et l'augmentation de la teneur en NH₃ dans les gaz rejetés à la cheminée, au-delà d'un certain seuil, indique que le catalyseur n'est plus suffisamment performant.

Un ou plusieurs modules 26 sont alors « isolés» et ne fonctionnent plus en phase de traitement, mais en phase de régénération (figure 5).

La phase de régénération comprend en particulier une étape de déch loration/désulfuration.

Pour le modules 26 concerné, le vérin 34 est dans la position telle que le premier orifice d'entrée 30 est obturé, tandis que le vérin 37 est dans la position telle que le premier orifice de sortie 32 est obturé.

Ledit module 26 est alimenté par les gaz de régénération 15, qui ne sont autres qu'une partie des gaz à traiter 3 qui ont été chauffés, à une température comprise entre 280 et 300°C. A cette température, il se produit une sublimation des sels déposés sur le catalyseur, qui sont évacués sous forme de gaz (notamment SO₂, HCI, NH₃) et donc la régénération du catalyseur. En effet, les gaz de régénération 15 pénètrent dans le module 26 par le deuxième compartiment d'entrée 11, traversent le bloc catalyseur 27 puis pénètrent dans le deuxième compartiment de sortie 19 avant d'être évacués par le conduit 21.

Simultanément, les gaz à traiter 3 pénétrent via les premiers compartiments d'entrée 8 et de sortie 16 dans les modules 26 en phase de dénoxification. Ainsi, par une simple commande des vérins 34,37, la régénération d'un module n'entraîne pas l'arrêt de l'installation 1, et les gaz 3 peuvent toujours être traités en continu. On augmente ainsi la durée de vie du catalyseur sans perte de capacité de fonctionnement de l'installation.

Les produits sublimés sont évacués avec les gaz issus de la régénération 20, séparément des gaz traités 17. De ce fait, les produits sublimés ne sont pas rejetés à l'atmosphère mais sont réinjectés en entrée de l'installation 1 où ils pourront être traités comme les gaz 3. En fin de phase de régénération, de l'air ambiant 41 peut être injecté dans le deuxième compartiment d'entrée 11, afin de le purger et d'éviter ainsi les problèmes de corrosion.

## Revendications

1. Réacteur catalytique pour la mise en oeuvre d'un procédé de dénoxification, **caractérisé en ce qu'**il comprend :
- un premier compartiment d'entrée (8) dans lequel les gaz à traiter (3) sont destinés à être introduits ;
- un premier compartiment de sortie (16) depuis lequel les gaz traités (17) sont destinés à être évacués ;
- au moins deux modules (26), chaque module contenant un catalyseur apte à permettre la dénoxification des gaz à traiter (3) et présentant un premier orifice d'entrée (30) communiquant avec le premier compartiment d'entrée (8) du réacteur (9) et un premier orifice de sortie (32) communiquant avec le premier compartiment de sortie (16) du réacteur (9) ;
- un deuxième compartiment d'entrée (11) dans lequel des gaz de régénération (15) du catalyseur sont destinés à être introduits, chaque module (26) présentant un deuxième orifice d'entrée (31) communiquant avec ledit deuxième compartiment d'entrée (11) du réacteur (9) ;
- pour chaque module (26), des moyens d'obturation d'entrée (34) mobiles aptes à obturer sélectivement le premier ou le deuxième orifice d'entrée (30, 31) dudit module (26) ;
- un deuxième compartiment de sortie (19) depuis lequel les gaz issus de la régénération (20) du catalyseur sont destinés à être évacués, chaque module (26) présentant un deuxième orifice de sortie (33) communiquant avec ledit deuxième compartiment de sortie (19) du réacteur (9) ;
- pour chaque module (26), des moyens d'obturation de sortie (37) mobiles aptes à obturer sélectivement le premier ou le deuxième orifice de sortie (32, 33) dudit module, lesdits moyens d'obturation d'entrée et de sortie (34, 37) étant agencés pour que chaque module puisse, en fonction des besoins, être traversé soit par les gaz à traiter (3) soit par les gaz de régénération (15), indépendamment du ou des autres modules.

2. Réacteur selon la revendication 1, **caractérisé en ce que** les moyens d'obturation d'entrée et/ou de sortie comprennent un volet d'obturation (36, 39) fixé sur une tige (35, 38) de vérin double effet (34, 37), ladite tige (35, 38) étant apte à être déplacée entre une première position, dans laquelle le volet d'obturation (36, 39) obture le premier orifice d'entrée (30), respectivement de sortie (32), et une deuxième position, dans laquelle le volet d'obturation (36, 39) obture le deuxième orifice d'entrée (31), respectivement de sortie (33).

3. Réacteur selon la revendication 1 ou 2, **caractérisé en ce que** le premier compartiment d'entrée (8), respectivement de sortie (16), est situé en-dessous du deuxième compartiment d'entrée (11), respectivement de sortie (19), une zone (28, 29) d'un module (26) étant intercalée entre les premier et deuxième compartiments, de sorte que ladite zone (28, 29) puisse être en communication avec les premier et deuxième compartiments via le premier et le deuxième orifices (30, 31, 32, 33).

## Patentansprüche

1. Katalytischer Reaktor zur Anwendung eines Verfahrens zur Entfernung von Stickoxiden, **dadurch gekennzeichnet, dass** er enthält:
- ein erstes Eingangsabteil (8), in das die zu behandelnden Gase (3) eingeführt werden sollen;
- ein erstes Ausgangsabteil (16), von dem aus die behandelten Gase (17) abgeführt werden sollen;
- mindestens zwei Module (26), wobei jedes Modul einen Katalysator enthält, der die Entfernung von Stickoxiden aus den zu behandelnden Gasen (3) ermöglichen kann, und eine erste Eingangsöffnung (30), die mit dem ersten Eingangsabteil (8) des Reaktors (9) in Verbindung steht, und eine erste Ausgangsöffnung (32) aufweist, die mit dem ersten Ausgangsabteil (16) des Reaktors (9) in Verbindung steht;
- ein zweites Eingangsabteil (11), in das Regenerierungsgase (15) des Katalysators eingeführt werden sollen, wobei jedes Modul (26) eine zweite Eingangsöffnung (31) aufweist, die mit dem zweiten Eingangsabteil (11) des Reaktors (9) in Verbindung steht;
- für jedes Modul (26) bewegliche Eingangsverschlusseinrichtungen (34), die selektiv die erste oder die zweite Eingangsöffnung (30, 31) des Moduls (26) verschließen können;
- ein zweites Ausgangsabteil (19), von dem aus die von der Regenerierung (20) des Katalysators stammenden Gase abgeführt werden sollen, wobei jedes Modul (26) eine zweite Ausgangsöffnung (33) aufweist, die mit dem zweiten Ausgangsabteil (19) des Reaktors (9) in Verbindung steht;
- für jedes Modul (26) bewegliche Ausgangsverschlusseinrichtungen (37), die selektiv die erste oder die zweite Ausgangsöffnung (32, 33) des Moduls verschließen können, wobei die Eingangs- und Ausgangsverschlusseinrichtungen (34, 37) so angeordnet sind, dass jedes Modul abhängig vom Bedarf entweder von den zu behandelnden Gasen (3) oder von den Regenerierungsgasen (15) durchquert werden kann, unabhängig von dem oder den anderen Modul(en).

2. Reaktor nach Anspruch 1, **dadurch gekennzeichnet, dass** die Eingangs- und/oder Ausgangsverschlusseinrichtungen eine Verschlussklappe (36, 39) umfassen, die an einer Stange (35, 38) eines doppeltwirkenden Zylinders (34, 37) befestigt ist, wobei die Stange (35, 38) zwischen einer ersten Stellung, in der die Verschlussklappe (36, 39) die erste Eingangsöffnung (30) bzw. Ausgangsöffnung (32) verschließt, und einer zweiten Stellung verschoben werden kann, in der die Verschlussklappe (36, 39) die zweite Eingangs- (31) bzw. Ausgangsöffnung (33) verschließt.

3. Reaktor nach Anspruch 1 oder 2, **dadurch gekennzeichnet, dass** das erste Eingangsabteil (8) bzw. Ausgangsabteil (16) sich unter dem zweiten Eingangsabteil (11) bzw. Ausgangsabteil (19) befindet, wobei eine Zone (28, 29) eines Moduls (26) so zwischen das erste und das zweite Abteil eingefügt ist, dass die Zone (28, 29) mit dem ersten und dem zweiten Abteil über die erste und die zweite Öffnung (30, 31, 32, 33) in Verbindung stehen kann.

## Claims

1. Catalytic reactor for implementing a denoxification method, **characterized in that** it comprises:
- a first inlet compartment (8) into which gases (3) for treatment are to be introduced;
- a first outlet compartment (16) from which the treated gases (17) are to be discharged;
- at least two modules (26), each module containing a catalyst able to allow the gases (3) for treatment to be denoxified and having a first inlet orifice (30) communicating with the first inlet compartment (8) of the reactor (9) and a first outlet orifice (32) communicating with the first outlet compartment (16) of the reactor (9);
- a second inlet compartment (11) into which regeneration gases (15) adapted for regenerating the catalyst are to be introduced, each module (26) having a second inlet orifice (31) communicating with the said second inlet compartment (11) of the reactor (9);
- for each module (26), mobile inlet shut-off means (34) able selectively to shut off the first or the second inlet orifice (30, 31) of the said module (26);
- a second outlet compartment (19) from which the gases resulting from the regeneration (20) of the catalyst are to be discharged, each module (26) having a second outlet orifice (33) communicating with the said second outlet compartment (19) of the reactor (9);
- for each module (26), mobile outlet shut-off means (37) able selectively to shut off the first or the second outlet orifice (32, 33) of the said module, the said inlet and outlet shut-off means (34, 37) being arranged in such a way that each module can, as required, either have the gases (3) for treatment passing through it or have the regeneration gases (15) passing through it, independently of the other module or modules.

2. Reactor according to Claim 1, **characterized in that** the inlet and/or outlet shut-off means comprise a shut-off flap (36, 39) fixed to a rod (35, 38) of a double-acting actuating cylinder (34, 37), the said rod (35, 38) being able to be moved between a first position, in which the shut-off flap (36, 39) shuts off the first inlet orifice (30) or, respectively, outlet orifice (32), and a second position, in which the shut-off flap (36, 39) shuts off the second inlet orifice (31), respectively the second outlet orifice (33).

3. Reactor according to Claim 1 or 2, **characterized in that** the first inlet compartment (8), respectively the first outlet compartment (16), is situated below the second inlet compartment (11), respectively the second outlet compartment (19), a zone (28, 29) of one of said modules (26) being interposed between the first and second compartments so that the said zone (28, 29) can be in communication with the first and second compartments via the first and second orifices (30, 31, 32, 33).
